(19) **Europäisches Patentamt**
**European Patent Office**
**Office européen des brevets**

(11) **EP 2 702 097 B1**

(12) **EUROPEAN PATENT SPECIFICATION**

(45) Date of publication and mention
of the grant of the patent:
**07.10.2020 Bulletin 2020/41**

(21) Application number: **12721167.0**

(22) Date of filing: **26.04.2012**

(51) Int Cl.:
***C08K 3/26*** (2006.01)

(86) International application number:
**PCT/EP2012/001783**

(87) International publication number:
**WO 2012/146375 (01.11.2012 Gazette 2012/44)**

(54) **ELASTOMERIC ARTICLE**

ELASTOMERARTIKEL

ARTICLE ÉLASTOMÈRE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **28.04.2011 EP 11003478**
**19.12.2011 EP 11009970**

(43) Date of publication of application:
**05.03.2014 Bulletin 2014/10**

(73) Proprietor: **Schaefer Kalk GmbH & Co. KG**
**65582 Diez (DE)**

(72) Inventors:
• **KEE, Eu Leong**
**47630 Selangor (MY)**
• **CHONG, Kok Loong**
**48000 Selangor (MY)**
• **MOHD YUSOF MD. ISA, Yusof**
**Kedah (MY)**
• **NOVER, Christoph**
**47495 Rheinberg (DE)**
• **STÖVER, Hein-Dieter**
**65558 Heistenbach (DE)**

(74) Representative: **Mai Dörr Besier**
**European Patent Attorneys**
**European Trademark Attorneys**
**Patentanwälte**
**Kreuzberger Ring 64**
**65205 Wiesbaden (DE)**

(56) References cited:
**EP-A2- 0 143 363      WO-A1-2009/138798**
**US-A- 6 022 517      US-A1- 2009 192 244**

US-B1- 6 979 734

• SHENGDA: "calcium carbonate dispersion Manufacturer", INTERNET CITATION, 1 January 2005 (2005-01-01), pages 1-3, XP007919056, Retrieved from the Internet: URL:http://www.manufacturer.com/product/i8 498108-calcium+carbonate+disper sion.html [retrieved on 2011-07-11]
• ANONYMOUS: "Profile Shengda Tech", INTERNET CITATION, 9 July 2009 (2009-07-09), pages 1-5, XP007919054, Retrieved from the Internet: URL:http://www.shengdatechinc.com/files/09 -07-09%20SDTH%20profile.pdf [retrieved on 2011-07-11]
• SHE: "calcium carbonate dispersion Manufacturer", INTERNET CITATION, 1 January 2005 (2005-01-01), pages 1-3, XP007919056, Retrieved from the Internet: URL:http://www.manufacturer.com/product/i8 498108-calcium+carbonate+dispersion.html [retrieved on 2011-07-11]
• CHUN-MEI DENG ET AL: "CaCO3/natural rubber latex nanometer composite and its properties", JOURNAL OF APPLIED POLYMER SCIENCE, vol. 101, no. 5, 1 January 2006 (2006-01-01), pages 3442-3447, XP055621526, US ISSN: 0021-8995, DOI: 10.1002/app.24345

**(Cont. next page)**

- **SANDRA SCHLÃ GL ET AL: "Survey of chemical residues and biological evaluation of photochemically pre-vulcanized surgical gloves", MONATSHEFTE FÜR CHEMIE - CHEMICAL MONTHLY ; AN INTERNATIONAL JOURNAL OF CHEMISTRY, SPRINGER-VERLAG, AU, vol. 141, no. 12, 6 October 2010 (2010-10-06), pages 1365-1372, XP019861764, ISSN: 1434-4475, DOI: 10.1007/S00706-010-0404-3**
- **S. MANROSHAN ET AL: "Effect of nanosized calcium carbonate on the mechanical properties of latex films", JOURNAL OF APPLIED POLYMER SCIENCE, vol. 96, no. 5, 1 January 2005 (2005-01-01), pages 1550-1556, XP055621135, US ISSN: 0021-8995, DOI: 10.1002/app.21595**

Remarks:
The file contains technical information submitted after the application was filed and not included in this specification

Remarks:

## Description

The present invention pertains to an elastomeric article, a process for making said elastomeric article, and possible fields of application of said elastomeric article.

Elastomeric articles are usually made of natural rubber materials or synthetic rubber materials. The development of modern synthetic rubber materials have made possible the manufacture of a wide variety of elastomeric articles having varying properties of strength and chemical resistance. Among these articles are gloves designed for either industrial or medical uses. Rubber gloves are usually divided into five categories: examination, surgical, household, industrial and clean room. PVC gloves are normally not categorized as medical gloves but use in food industry. As safety accessories, industrial and medical gloves protect a user from environmental hazards such as chemicals or pathogens. In particular, medical gloves contribute to sanitary hospital conditions by limiting exposure of patients to potentially infectious matter, and serve to protect health professionals from disease transmission through contact with body fluids.

Relatively thin and flexible industrial or medical gloves have traditionally been made of natural rubber latex in a dipping process. The donning surface (i.e. the interior) of these gloves is conventionally coated with corn starch, or talcum powder to lubricate the gloves, making them easier to don. In recent years, powder-free work gloves and medical gloves have largely replaced powdered gloves because of changing needs and perceptions of glove consumers. For example, cornstarch or other powders can impede healing if it gets into tissue (as during surgery). Similarly, powders are unsuitable for clean rooms such as those used in the manufacture of semiconductors and electronics.

Glove consumers have been moving away from natural rubber gloves due, in part, to an increasing rate of significant allergic reactions to proteins in natural rubber latex among health professionals as well as the general population. The industry has increasingly moved to latex emulsions based on synthetic rubber materials. While hospitals, laboratories, or other work environments that use rubber gloves often want to go *"latex free"* to better protect their workers, the higher cost of non-latex products such as nitrile rubber, often limits their ability to make the change. For example, nitrile rubber gloves may cost two or more times the price of the natural rubber latex or vinyl-based counterparts. This fact has often caused purchasers in cost-sensitive environments such as many hospitals, either to switch to less expensive polyvinyl chloride gloves or prevented them from switching to the synthetic materials.

In addition to being more expensive, nitrile-butadiene rubber medical exam gloves are typically stiffer and are perceived as much less comfortable to wear in comparison to similar gloves made from natural rubber latex materials.

On the other hand, polyvinyl chloride medical exam gloves are considered a lower performance choice, since they are typically stiffer and less elastic than even the conventional thicker nitrile rubber medical exam gloves.

While it might seem that a practical solution to the expense of conventional nitrile rubber medical exam gloves would be to make nitrile rubber medical exam gloves thinner than conventional nitrile rubber medical exam gloves (e.g., 0.11 mm to 0.20 mm in thickness at the palm region of the glove as measured generally in accordance with ASTM D3767, procedure A), there are significant problems associated with making nitrile rubber medical exam gloves that are thinner than conventional nitrile rubber medical exam gloves. A primary problem is pinhole formation which is sometimes referred to as *"pinholes"* or *"pinhole defects"* and which requires complex and expansive measurements in the manufacturing process to ensure production of suitable medical exam gloves meeting the needs of the market.

Although comparatively inexpensive, polyvinyl chloride medical exam gloves have a number of shortcomings. The shortcomings of polyvinyl chloride medical exam gloves include: being relatively inelastic; having relatively low tensile strength; having relatively greater amounts of pinhole defects; and leaching certain toxic components. These shortcomings can result in less comfort for the wearer, a weaker glove with higher permeability or poorer barrier protection against some common chemicals, and harm to the user and/or environment.

Fillers are normally added to elastomeric polymers for two purposes: to lower the cost or to improve the properties. The cost is lowered by replacing a more expensive material (polymer such as rubber), with a less expensive material (filler). Improvement of properties, typically referred to as reinforcement, is characterized by an increase in physical properties, typically stiffness, tear strength and tensile strength. The chemical crosslinks in an elastomeric network impart strength and resilience, and it is thought that interaction with filler particles can bring about similar performance improvements.

Inter alia, calcium carbonate particles are contemplated as potential filler material.

The presentation D. Hill How to get more for less? A literature review on the use of fillers in articles dipped from latex Latex 2010, 23-24 March 2010, Amsterdam, The Netherlands, conference volume, discusses the relevant literature describing the use of fillers in latex and latex-dipped articles, and tries to show where the use of fillers can be successful in enhancing properties and reducing costs.

In this presentation, reference is made to the publication of S. Manroshan, A. Baharin Effect of Nanosized Calcium Carbonate on the Mechanical Properties of Latex Films Journal of Applied Polymer Science, Vol. 96, 2005, 1550-1556, and it is explained that

*"--- some workers have reported significant levels of reinforcement using fine calcium carbonate. Manroshan and Baharin have examined the effect of nanosized acrylic dispersed calcium carbonate in prevulcanized natural rubber latex films.*

*As is usual, the modulus increased as the loading of filler increased, and tensile strength and elongation attained maximum values at 10 pphr of calcium carbonate. The physical properties improved with accelerated aging, suggesting that the heat treatment gave more intimate contact between the filler and the matrix. "*

Said publication of S. Manroshan, A. Baharin Effect of Nanosized Calcium Carbonate on the Mechanical Properties of Latex Films Journal of Applied Polymer Science, Vol. 96, 2005, 1550-1556, relates to an acrylic dispersed nanosized calcium carbonate filler that was added to a prevulcanized latex compound in different amounts. The effect of filler content on the curing time, modulus, tensile strength, elongation at break (Eb) before and after aging, and the morphology of the films was investigated. Results showed that the curing time decreased with filler loading because of the increased interaction between the filler and rubber matrix, as reflected by the decrease in the apparent swelling index. Modulus at 100% elongation and modulus at 300% elongation increased with filler loading. Tensile strength and Eb increased up to 10 phr of filler loading and then decreased again. Aged films showed improved mechanical properties compared to those of unaged films. Micrographs showed that agglomeration occurred as the filler content was increased. The nanosized calcium carbonate used in this study had an average particle size of 40 nm and a surface area (BET) of 40 $m^2/g$.

The presentation J. Khamsook, R. Magaraphan Effect of fillers on the surface properties of NR and DPNR sheets Latex 2006, 24-25 January 2006, Frankfurt, Germany, conference volume, pertains to formulations of compounded natural rubber latex (NRL) and deproteinized natural rubber latex (DNRL) with three kinds of filler namely, calcium carbonate, admicelled silica and precipitated silica. It is concluded that non-black filled vulcanized DNRL films have lower tensile strengths than those of NRL films while elongation at break shows insignificant dependent on type of rubber. The latex films gave optimum tensile strength at 25 phr for calcium carbonate. However, the type of calcium carbonate used in this study is not specified in detail.

The publication S. Mathew, S. Varghese Natural Rubber Latex-based Nanocomposites with Layered Silicates J. Rubb. Res., 8 (1), 1-15, refers to sulphur prevulcanised natural rubber latex nanocomposites produced by mixing dispersions of layered silicates with prevulcanised latex. However, use of calcium carbonate is not contemplated in this study.

The publication W.G. Hwang, K.H. Wie, C.M. Wu Preparation and mechanical properties of nitrile butadiene rubber/silicate nanocomposites Polymer 45, 2004, 5729-5734, discloses elastomer nanocomposites consisting of nitrile butadiene rubber latex and layered silicates prepared by a modified latex shear blending process aided with ball milling. Again, use of calcium carbonate is not contemplated in this study.

The publication J.K. Kurian, K.C. Mary, N. R. Peethambaran, B. Kuriakose Effect of Non-Black Fillers and Pigments on the physical properties and degradation resistance of natural rubber latex thread exposed to UV-radiation Indian Journal of Natural Rubber Research, 14 (2), 2001, 102-105, deals with the effect of titanium dioxide and its combination with fillers such as china clay, precipitated calcium carbonate and barium sulphate at a low dosage on the physical properties and degradation resistance of latex thread prepared using conventional and efficient vulcanization systems. Though titanium dioxide had little effect, its combination with fillers attributed better modulus and tensile strength to the thread samples. Addition of titanium dioxide did not improve the degradation resistance of thread to heat and UV light. The combination of titanium dioxide with precipitated calcium carbonate showed better performance under photo oxidative ageing. However, the type of calcium carbonate used in this study is not specified in detail.

The publication H.H. Cai, S.D. Li, G.R. Tian, H.Bi. Wang, J.H. Wang Reinforcement of Natural Rubber Latex Film by Ultrafine Calcium Carbonate Journal of Applied Polymer Science, Vol. 87, 2003, 982-985, refers to the use of ultrafine calcium carbonate to reinforce natural rubber latex films, and the effect of its content on latex properties such as surface tension, viscosity, mechanical stability, and heat stability and the physical properties of latex film before and after aging such as tear strength, modulus, and tensile strength were investigated. The particle sizes of the calcium carbonate particles were in the range of 0.356 μm - 6.3 μm, where particles with a diameter in the range of 0.356 μm - 0.926 μm, 0.356 μm - 1.775 μm and 0.356 μm - 3.153 μm accounted for 10%, 50%, and 90%, respectively. The average particle diameter of calcium carbonate was 1.551 μm, and there was a normal-type distribution of particle diameter size of calcium carbonate. However, BET surface area of the calcium carbonate particles is not specified.

US 2009/0192244 A1 discloses a rubber latex composition having reduced allergenicity. Methods for producing a rubber latex composition having reduced allergenicity are also disclosed.

US 6,979,734 B1 relates to rubber latex comprising an amount of starch, which rubber latex has a reduced allergen activity as compared to the same rubber latex without starch. In addition, this patent relates to the use of modified starch as donning powder for surgical gloves, wherein the used starch is a granular, low crystalline, preferably a non-crystalline starch.

The publication of S. Schlogl, N. Aust, R. Schaller, A. Holzner, W. Kern Survey of chemical residues and biological evaluation of photochemically pre-vulcanized surgical gloves Monatsh Chem, 141, 2010, 1365-1372 teaches that Latex allergies arise from the presence of latex proteins as well as noxious rubber additives (mainly accelerators and activators used in conventional sulfur-accelerated vulcanization processes) in medical devices (e.g., medical gloves, catheters) made from natural rubber latex. The ultraviolet (UV) light-initiated pre-vulcanization of natural rubber latex makes efficient cross-linking feasible without using any toxic, mutagenic, or irritating chemicals. The cross-linking in the latex particles is accomplished via the thiol-ene addition reaction in the presence of a polyfunctional thiol and a photoinitiator. The process is carried out in a falling film photoreactor on a pilot scale which provides a continuous irradiation of the latex emulsion. The UV technique is said to be suitable for an easy up-scaling and allegedly represents the entrance into large-volume industrial production. The surgical gloves are then made by a conventional coagulant dipping process comprising alleedly good physical properties and high ageing stabilities. The aim of this study was to evaluate the biological properties and skin compatibility of UV-pre-cured gloves in skin sensitization, skin irritation studies, and cytotoxic tests. In addition the biologically available chemical residues in the gloves were characterized by UV-visible spectroscopy, elementary analyses, and high-performance liquid chromatography coupled with mass spectroscopy. The results of the studies revealed that UV-cross-linked surgical gloves exhibit good skin compatibility together with low cytotoxicity and residual chemical levels in the range of 60 and 120 $\mu$g/$g_{glove}$.

In view of the prior art, it was therefore an object of the present invention to indicate possibilities for improvement of the conventional elastomeric articles. In particular, a need existed for elastomeric articles having superior barrier properties against hazardous substances such as chemicals and pathogens, in particular virus, bacteria and solvents. At the same time, said elastomeric articles should exhibit the best mechanical properties possible. In this context, the main focus was on tear strength, modulus, elongation at break, force at break, heat stability and tensile strength in order to avoid failure in application of said elastomeric articles such as pinhole defects.

Furthermore, use of said elastomeric articles should be as safe and as comfortable as possible. In particular, said elastomeric articles should have a high tear strength and a good pliabilty and softness at the same time. In addition, they should not leach significant amounts of hazardous components and should not have significant allergenic potential.

Elastomeric articles for chemical and medical use such as gloves, and condoms, especially medical exam gloves, having superior barrier properties against hazardous substances such as chemicals and pathogens, in particular virus, bacteria and solvents; very good mechanical properties; very good pliability and softness and wearing comfort; and no significant allergenic potential in use were particularly aimed at.

A further object of the present invention was specifying a method for implementation of the present invention, more precisely, for producing the elastomeric article of the present invention, in as simple a manner as possible on a large scale and inexpensively.

Furthermore, particularly advantageous fields of application of the elastomeric article according to the invention should be indicated.

These objects of the present invention are achieved by an elastomeric article as disclosed in claims 1 to 14.

Specifically, a first aspect the present invention discloses an elastomeric article comprising at least one elastomer and precipitated calcium carbonate particles, wherein:

the sphere equivalent particle size of said precipitated calcium carbonate particles is less than 1.0 $\mu$m, wherein the sphere equivalent particle size of the precipitated calcium carbonate particles is determined using the following equation:

$$\text{sphere equivalent particle size [}\mu\text{m] = 2.21 / BET [m}^2\text{/g]};$$

the precipitated calcium carbonate has an average particle size (d50%) within a range of 0.8 $\mu$m to 1.2 $\mu$m; and said elastomer is made from latex particles of at least one naturally occurring rubber surrounded by protein anions, wherein said natural rubber latex is a dispersion of cis-1,4-polyisoprene in water; wherein the BET is measured as disclosed below in the description.

In a second aspect the present invention discloses a process for making an elastomeric article, the process comprising the following steps:

(1) providing a mold;

(2) immersing the mold into a rubber latex emulsion comprising calcium carbonate particles wherein a sphere equivalent particle size of said precipitated calcium carbonate particles is less than 1.0 $\mu$m, to form a layer of coagulated rubber latex comprising said calcium carbonate particles, on the mold surface;

(3) drying the coagulated rubber latex to form a body of the elastomeric article on the mold; and

(4) removing the body of the elastomeric article from the mold;

wherein a sphere equivalent particle size of said precipitated calcium carbonate particles is less than 1.0 $\mu$m, wherein the sphere equivalent particle size is determined by using the equation:

$$\text{sphere equivalent particle size } [\mu m] = 2.21/\text{BET } [m^2/g];$$

the precipitated calcium carbonate has an average particle size (d50%) within a range of 0.8 mm to 1.2 mm, and said elastomer is made from latex particles of at least one naturally occurring rubber surrounded by protein anions, wherein said natural rubber latex is a dispersion of cis-1,4-polyisoprene is water.

In a third aspect the present invention discloses the use of an elastomeric article as defined in the first aspect of the present invention as a medical examination glove, an industrial glove, a balloon, a condom, a probe cover, a dental dam, a finger cot, a catheter, or a part of a garment.

The elastomeric article of the present invention has superior properties, in particular, superior barrier properties against hazardous substances such as chemicals and pathogens, in particular virus, bacteria and solvents.

At the same time, said elastomeric article exhibits very good mechanical properties, especially very good tear strength, very good modulus, very good elongation at break, very good force at break, very good heat stability, and very good tensile strength. As a consequence, the risk of failure in application of said elastomeric articles such as pinhole defects, is minimized.

Furthermore, said elastomeric article can be used in a very safe and very comfortable way. It has a high tear strength and a good pliability and softness at the same time. In addition there is not risk that significant amounts of hazardous components are leached by said elastomeric article. By the way of contrast, hazardous components, such as fatty acids and potentially allergenic compounds, are usually immobilised and neutralised by tight fixation to the precipitated calcium carbonate particles in the elastomeric article of the present invention. Thus, leaching of hazardous components is significantly reduced. Therefore, the elastomeric article according to the invention is very environment-friendly and user-friendly, since addition of calcium carbonate is absolutely unobjectionable from both medical and environmental point of view.

The elastomeric article of the present invention is particularly suitable for applications in the chemical and the medical field. Particularly preferred applications include gloves, balloons and condoms, in particular medical exam gloves, wherein superior barrier properties against hazardous substances, such chemicals and pathogens, in particular virus, bacteria and solvents; very good pliability and softness and wearing comfort; and no significant allergenic potential in use are observed, even if said elastomeric article comprises an elastomer made of natural rubber as said elastomer. The present invention provides a modified elastomeric article that exhibits not only good chemical resistance, but also stretch and silky tactile characteristics similar to natural rubber latex.

The solution of the present invention can be readily implemented. The elastomeric article of the present invention can be produced in a very simple manner on a large scale and very inexpensively. Addition of precipitated calcium carbonate particles as presently claimed, inter alia, improves the mechanical properties of the elastomeric article according to the invention, in particular its tear strength, and, as a consequence, facilitates its production, since the risk of potential cracks, or pinholes in the elastomeric material of the invention are minimized. For example, if the elastomeric article of the invention is produced by a dipping process using a mold, release properties from said mold will be significantly improved.

The present invention provides an elastomeric article, preferably a glove, a balloon, or a condom, in particular a medical exam glove, made from an elastomeric material. As used herein, the terms *"elastic"* or *"elastomeric"* generally refer to a material that, upon application of a force, is stretchable to an extended, biased length. Upon release of the stretching, biasing force, the material will substantially recover to near net shape or original dimensions.

In the present invention, the terms *"rubber"* and *"elastomer"* preferably refer to high molar mass polymeric materials which are classified according to the temperature dependence of their mechanical properties.

The term *"rubber"* (raw rubber) preferably pertains to a non-cross-linked, but cross-linkable (vulcanizable) polymer with rubber-elastic properties at room temperature (20°C). At higher temperature or under the influence of deforming forces, raw rubber preferably exhibits increasing viscous flow, so that it can be molded under suitable conditions. Usually, raw rubber, especially raw rubber latex, is a starting material for the production of elastomers.

The term *"elastomer"* relates to materials exhibiting elastomeric properties and preferably refers to polymeric materials that are cross-linked (vulcanized) up to their decomposition points. Preferably, they are hard and glassy at low temperature and do not exhibit viscous flow even at high temperature. They have rubber-elastic properties, particularly from room temperature up to their decomposition point.

Rubber-elastic behavior is characterized by a relatively low shear modulus with a rather slight temperature dependence. It is caused by entropy changes. An elastomer that is preferably cross-linked by chemical or van der Waals bonds is forced into a more highly ordered conformation under extension. This leads to a decrease in entropy. When the load is removed the polymer molecules return to their original position with an increase in entropy.

Elastomers preferably exhibit a glass transition temperature of < 0 °C in the torsional vibration test according to DIN 53 520. Their shear moduli preferably lie in the range 0.1 - 1000 N/mm$^2$ and preferably remain almost constant between 20°C and the decomposition temperature.

Vulcanization is a process in which rubber, through a change in its chemical structure (for example, crosslinking), is converted to a condition in which the elastic properties are conferred or re-established or improved or extended over a greater range of temperatures. In some cases, the process is carried to a point where the substances become rigid (ISO 1382 no. 1003).

For further details regarding these technical terms, reference is made to technical literature, in particular to Ullmann's Encyclopedia of Industrial Chemistry, Fifth Edition on CD-ROM, 1997, Wiley-VCH, Weinheim, Germany, *"rubber"*, and to the corresponding standards defining these terms, especially to DIN 53 501, and DIN 7 724, which also define the term *"vulcanization"*. Vulcanization is also explained in ISO 1382 no. 1003.

The elastomer, used in the present invention, can be made from at least one naturally occurring polymer. Mixtures of two or more rubbery materials may also be used.

According to the invention, the naturally occurring rubber is natural polyisoprene, in particular cis-1,4-polyisoprene (natural rubber; NR)

The natural rubber latex is a dispersion of cis-1,4-polyisoprene in water. The average particle size preferably is between 0.15 mm and 3.0 mm. The particle-size distribution is usually very broad. The aqueous dispersion preferably contains between 30 % and 38 % solid material, depending on the time of the year and the age of the tree. Other components of the latex preferably are 1 % - 2 % proteins and phosphoproteins, about 2 % resins, about 1 % fatty acids, about 1 % carbohydrates, and about 0.5 % inorganic salts. The rubber particles are surrounded by protein anions and are thus effectively negatively charged, which hinders coagulation of the latex. These proteins are preferably decomposed rapidly by bacteria and enzymes when exposed to air, and the rubber then partially coagulates. In addition, in the presence of air, cross-linking of the rubber preferably occurs within the latex particles, with gel formation and subsequent degradation of the polymer chains.

Use of standard Malaysian rubber (SMR) is particularly favorable in the present invention.

In the present invention, the rubber is preferably vulcanized (crosslinked; cured) in order to fix its high resilience following mechanical deformation. Vulcanization or vulcanization is a chemical process for converting rubber or related polymers into more durable materials via the addition of sulfur or other equivalent *"curatives"*. These additives modify the polymer by forming crosslinks (bridges) between individual polymer chains.

Preferred crosslinking agents include 0.1 % by weight to 5.0 % by weight, preferably 0.5 % by weight to 2.5 % by weight, in particular 0.75 % by weight to 1.5 % by weight of sulfur. Said crosslinking agents preferably also include suitable auxiliary components, such as activators, especially zinc oxide, bis(dibutyldithiocarbamato)zinc, titanium dioxide and dispersants. In that context, a mixture comprising

- 0.1 % by weight to 5.0 % by weight, preferably 0.5 % by weight to 2.5 % by weight, in particular 0.75 % by weight to 1.5 % by weight of sulfur;
- 0.1 % by weight to 5.0 % by weight, preferably 0.5 % by weight to 2.5 % by weight, in particular 0.75 % by weight to 1.5 % by weight of zinc oxide;
- 0.01 % by weight to 0.5 % by weight, preferably 0.05 % by weight to 0.35 % by weight, in particular 0.1 % by weight to 0.25 % by weight of bis(dibutyldithiocarbamato)zinc;
- 0.1 % by weight to 5.0 % by weight, preferably 0.5 % by weight to 3.5 % by weight, in particular 1.5 % by weight to 2.5 % by weight of titanium dioxide; and
- 0.01 % by weight to 5.0 % by weight, preferably 0.15 % by weight to 0.75 % by weight, in particular 0.25 % by weight to 0.35 % by weight of dispersants has proven to be particularly beneficial.

The above-mentioned polymers and copolymers are well-known to the person skilled in the art. For further details, especially regarding their occurrences in nature, their preparation, their structure, their properties and/or their potential fields of application, reference is made to technical literature, in particular to Ullmann's Encyclopedia of Industrial Chemistry, Fifth Edition on CD-ROM, 1997, Wiley-VCH, Weinheim, Germany, *"rubber"* and *"latex -> rubber, 2. natural"*. Very useful information, especially about latex rubbers are also given in D. C. Blackley Polymer Latices: Science and technology, Volume 2: Type of latices, Springer Netherlands, 1997.

In addition to the at least one elastomer, the elastomeric article according to the present invention also comprises precipitated calcium carbonate particles. The term *"precipitated calcium carbonate"* is used herein to define a synthetically produced calcium carbonate, not based on calcium carbonate found in nature.

According to the present invention, the sphere equivalent particle size of the precipitated calcium carbonate particles is less than 1.0 μm, preferably less than 500 nm, advantageously less than 250 nm, particularly preferably less than 100 nm, especially less than 70.0 nm, even more preferably less than 40.0 nm, in particular less than 20.0 nm.

On the other hand, the sphere equivalent particle size of the precipitated calcium carbonate particles is preferably greater than 1.0 nm, advantageously greater than 5.0 nm, particularly preferably greater than 10.0 nm, even more preferably greater than 20.0 nm, in particular greater than 30.0 nm.

Most preferably, the sphere equivalent particle size of the precipitated calcium carbonate particles lies within the range from >1.0 nm to <1.0 $\mu$m, advantageously within the range from >5.0 nm to <500 nm, particularly preferably within the range from >10.0 nm to <250 nm, even more preferably within the range from >20.0 nm to <100 nm, in particular within the range from >30.0 nm to <100 nm.

The sphere equivalent particle size of the precipitated calcium carbonate particles is determined using the following equation:

$$\text{sphere equivalent particle size [µm]} = 2.21 / \text{BET [m}^2/\text{g]}$$

Consequently, the specific surface area (BET) of the precipitated calcium carbonate particles is preferably greater than 2.21 m$^2$/g, particularly preferably greater than 4.42 m$^2$/g, even more preferably greater than 8.84 m$^2$/g, in particular greater than 22.1 m$^2$/g, especially greater than 30 m$^2$/g, most preferably greater than 35 m$^2$/g.

In the present invention, the values for the sphere equivalent particle size and the BET of the precipitated calcium carbonate particles refer to all precipitated calcium carbonate particles contained in the elastomeric article of the invention.

The specific surface area of the precipitated calcium carbonate particles is obtained by measurement of nitrogen adsorption using the BET method. Use of Micromeritics Gemini 2360 Analyser is particularly favorable in this context. Any sample is degassed for the adsorption measurements at 130°C for at least 3h. Use of FlowPrep 060 Degaser is particularly favorable in this context.

The morphology of the precipitated calcium carbonate particles is not restricted. However, preferred precipitated calcium carbonate particles have morphology selected from the group consisting of rhombohedral, plate-like, scalenohedral, prismatic, acicular, and spherical, and combinations thereof.

According to a first particularly preferred embodiment of the present invention, the precipitated calcium carbonate particles have rhombohedral morphology. The aspect ratio of the particles, defined as the ratio of maximum particle diameter and minimum particle diameter, is preferably less than 2.0, more preferably less than 1.75, in particular less than 1.5. The specific surface of the particles is preferably greater than 10 m$^2$/g, more preferably greater than 15 m$^2$/g, in particular greater than 20 m$^2$/g.

According to a second particularly preferred embodiment of the present invention, the precipitated calcium carbonate particles have plate-like morphology. The aspect ratio of the particles, defined as the ratio of maximum particle diameter and minimum particle diameter, is preferably greater than 2:1, more preferably greater than 4:1, in particular greater than 8:1. Elastomeric articles comprising these particles are characterized by very good barrier properties.

According to a third particularly preferred embodiment of the present invention, the precipitated calcium carbonate particles have scalenohedral morphology. These particles comprise three or more pairs of mutually congruent scalene triangles as faces. The specific surface of the particles is preferably less than 20 m$^2$/g, more preferably less than 15 m$^2$/g, in particular less than 10 m$^2$/g. Use of these particles significantly improves the mold release properties of the elastomeric articles.

Precipitated calcium carbonate particles (PCC) can be produced by several methods but are normally produced by a carbonation process involving bubbling a gas containing carbon dioxide through an aqueous suspension of calcium hydroxide or milk-of-lime in a carbonator reactor. Other inorganic materials such as alum can be co-precipitated with PCC or can be precipitated onto the surface of the PCC precipitate. U.S. Pat. No. 5,783,038, for example, discloses one particular method of making precipitated carbonate pigment, although variations in the specific synthetic pathway, optional additives or agents, process conditions, and post-precipitation physical or chemical treatments, can be used to vary the particle size, morphology, and nature of the pigment surface, as will be understood by the skilled artisan. Precipitated calcium carbonate (PCC) differs greatly from natural ground calcium carbonate in its physical and chemical properties.

While the inventors should not be held to any particular theory, it is believed that use of precipitated calcium carbonate particles, instead of ground calcium carbonate particles, results in a more regular and more packed distribution of said calcium carbonate particles in the elastomeric article of the invention. As a consequence, the properties of the elastomeric article according to the invention are significantly improved, especially its barrier properties, and its mechanical properties.

Calcium carbonate occurs in three crystal structures: calcite, aragonite and (rarely) vaterite. Aragonite is commonly in the acicular form, whereas calcite can form scalenohedral, prismatic, spherical, plate-like and rhombohedral forms of PCC. Aragonite changes to calcite when heated to 400°C in dry air. The use of additives and dopants in the preparation of precipitated calcium carbonate can change the habit to a specific morphology. Soluble additives can selectively stabilize certain crystal faces of $CaCO_3$, and, therefore provide control of the habit of $CaCO_3$ through molecular recognition. Recognition is mediated by electrostatic, geometric and stereochemical interactions between the additives and specific crystal faces. The design and activity of tailor-made additives is now well established and known to the skilled artisan. For example, transition metal cations have a marked impact on the morphology and habit of $CaCO_3$, even at very low concentrations.

The amount of the elastomer and the precipitated calcium carbonate particles in the elastomeric article of the present invention is not limited. However, it is preferred that the elastomeric article of the present invention comprises, in each case in relation to the total weight of the elastomeric article, at least 50 %-wt., preferably at least 60 %-wt., more preferably at least 75 %-wt., and in particular at least 90 %-wt. of at least one elastomer. Furthermore, the elastomeric article of the present invention preferably comprises up to 40 phr (parts per hundred optionally vulcanized rubber), more preferably up to 25 phr, and in particular up to 15 phr of precipitated calcium carbonate particles meeting the requirements of the present invention. On the other hand, the elastomeric article of the present invention preferably comprises at least 1 phr, more preferably at least 5 phr, and in particular at least 7.5 phr of precipitated calcium carbonate particles meeting the requirements of the present invention.

The elastomeric article of the present invention may also comprise further additives. Particularly preferred additives include antidegradants, fillers, pigments, and plasticizers. However, their total amount, in relation to the total weight of the elastomeric article, is preferably limited to 20 wt.-%, more preferably to 10 wt.-%, most preferably to 1.0 wt.-%. In addition, natural rubber usually comprises 1 % - 2 % proteins and phosphoproteins, about 2 % resins, about 1 % fatty acids, about 1 % carbohydrates, and about 0.5 % inorganic salts. For further details regarding suitable additives for elastomeric articles and the components usually present in natural rubber, reference is made to technical literature, in particular to Ullmann's Encyclopedia of Industrial Chemistry, Fifth Edition on CD-ROM, 1997, Wiley-VCH, Weinheim, Germany, *"rubber, 4. Chemicals and Additives "and "latex -> rubber, 2. natural".* Very useful information, especially about additives for latex rubbers are also given in D. C. Blackley Polymer Latices: Science and technology, Volume 2: Type of latices, Springer Netherlands, 1997.

The elastomeric article of the invention is produced using a dipping process. The dipping process preferably comprises the following steps:

(1) providing a mold;
(2) immersing the mold into a rubber latex emulsion comprising calcium carbonate particles meeting the requirements of the present invention, to form a layer of coagulated rubber latex comprising calcium carbonate particles meeting the requirements of the present invention, on the mold surface;
(3) drying the coagulated rubber latex to form a body of the elastomeric article on the mold; and
(4) removing the body of the elastomeric article from the mold.

Preferably, before step (2), the mold is coated with a coagulant agent, wherein particularly suitable coagulant agents (precipitation agents) include acids, such as formic acid and acetic acid; and salts, such as sodium silicofluoride and calcium nitrate. In the present invention, use of calcium nitrate is especially favored.

The general process for making dipped elastomeric rubber products is well known to those in the art, and will not be reviewed in detail herein. For example, U.S. Patent Nos. 6,673,871, 7,041,367, or 7,178,171, each describes exemplary processes for making a dipped elastomeric rubber glove. However, the present invention also relates to a process for fabricating thin elastomeric membranes, films and articles that is an improvement over the conventional processes.

As mentioned above, the rubber is preferably vulcanized (crosslinked; cured) in order to fix its high resilience following mechanical deformation. Said vulcanization of the rubber can be achieved by routine methods, in particular by the use of well-known curing agents such as sulfur, and peroxides; vulcanization accelerators; and accelerator activators.

As curing agent, use of sulfur having a particle size d (v, 0.1) of less than 50 μm, more preferably of less than 40 μm, most preferably within the range of 20 μm to 35 μm; preferably also having a particle size d (v, 0.5) of less than 100 μm, more preferably of less than 90 μm, most preferably within the range of 60 μm to 75 μm; and preferably also having a particle size d (v, 0.9) of less than 220 μm, more preferably of less than 200 μm, most preferably within the range of 130 μm to 170 μm, is especially favored, such as Miwon® from Taiko Marketing SDN. BHD (Malaysia).

As vulcanization accelerator, use of ZnO, preferably having a particle size such that the residue on a 45 μm wet sieve is less than 0.5 %, more preferably less than 0.3 %, most preferably 0.2 % or less, is especially favored, such as Metoxide®.

As accelerator activator, use of zinc diethyldithiocarbamate, preferably having a Zn content within the range of 15.0 % to 21.0 %, more preferably within the range of 16.5 % to 20.0 %, most preferably within the range of 17.5 % to 19.0 %, is espcially favored, such as Anchor® from ZDEC from Castle Chemicals (UK). For preferred zinc diethyldithiocarbamates, the residue on 150 μm sieve is 0.1 % or less, on a 63 μm sieve the residue is preferably 0.5 % or less.

These chemicals are preferably used in a liquid composition, preferably compring water and preferably also comprising at least one dispersing agent, such as sodium polyacrylate, wherein use of sodium polyacrylate solutions having a pH, measured at 25°C, within the range of 7 to 8, and a solid within the range of 30% to 60%, most preferably within the range of 40% to 50%, is especially favored as said dispersing agent, such as Dispex® N 40 from Ciba Specialty Chemicals.

For further details, reference is made to technical literature, especially to Ullmann's Encyclopedia of Industrial Chemistry, Fifth Edition on CD-ROM, 1997, Wiley-VCH, Weinheim, Germany, *"rubber, 4. Chemicals and Additives, 2. Vulcanization Chemicals"* and *"latex -> rubber, 2. natural"*. Very useful information, especially about processing latex rubbers are also given in D. C. Blackley Polymer Latices: Science and technology, Volume 2: Type of latices, Springer Netherlands, 1997.

The order of vulcanization of the rubber and addition of the precipitated calcium carbonate particles to the rubber latex is not critical. The rubber may be pre-vulcanized, or may be vulcanized after addition of the precipitated calcium carbonate particles to the rubber latex. However, since the required curing time decreases with loading of calcium carbonate particles meeting the requirements of the present invention, because of the increased interaction between the calcium carbonate particles and the rubber matrix, vulcanization of the rubber after the addition of the precipitated calcium carbonate particles is particularly advantageous.

In addition, crosslinking via ionically bonding is also possible. This requires suitable ionic groups in the rubber such as carboxylic groups, which may be used to ionically bond said ionic groups together using multivalent metal ions. These ions are typically supplied through addition of zinc oxide to the rubber latex emulsion. Typically, the physical strength and stiffness/softness properties of the polymer are sensitive to this kind of crosslinking.

If the rubber comprises ionic groups, especially carboxylic acid groups, the extent or amount and types of ionic crosslinking can be controlled by regulating the content of all ionic materials during compounding or formulating of the rubber latex. The crosslinking of the ionic groups is controlled by the amount and type of ionic materials added to the rubber latex before it is used to produce dipped articles.

Of course, the rubber latex emulsion used in present invention, may comprise further components such as additives, in particular antidegradants, fillers, pigments, and plasticizers; as well as processing aids, in particular emulsifiers, stabilizers, and coagulating agents.

As pigment, use of $TiO_2$, preferably having an inorganic coating, especially one comprising zirconia and/or alumina, said $TiO_2$ preferably having a crystal size of less than 0.3 $\mu$m, more preferably of less than 0.27 $\mu$m, most preferably within the range of 0.2 $\mu$m to 0.25 $\mu$m, said $TiO_2$ preferably comprising more than 50% rutile crystals, is especially favored, such as Tioxide® TR92 from Huntsman (GB).

The amount of these components is usually limited to 20 wt.-% of the total composition. These other ingredients preferably include metallic oxides (e.g., ZnO, MgO) in levels of 0.25 - 10 wt.-%, sulfur or other crosslinking agents (e.g., peroxide, aziridine, acrylates) at levels of 0.001 wt.-% to 3 wt.-%, and accelerators at a level of 0.25 wt.-% to 2.0 wt.-%. Any of the various vulcanization accelerators may be used, including, but not limited to thiurams, dithiocarbamates, xanthates, guanidines, or disulfides.

The thickness of the article can be controlled by a variety of means during the dipping process such as coagulant concentration, manipulation of the length of time that the mold dwells in or is covered by the emulsion, temperature, or mechanical rotation or pivoting of the mold after withdraw from the dipping bath.

Since the addition of precipitated calcium carbonate particles meeting the requirements of the present invention, significantly improves the release properties of the coagulated substrate, addition of a release agent is not required. However, said release properties may be still further improved by addition of a conventional release agent. According to the present invention the use of calcium carbonate having an average particle size (d50%) within the range of 0.8 $\mu$m to 1.2 $\mu$m, has proven of particular advantage in that context.

Accordingly, in one particularly preferred embodiment of the invention, the dipped products of the invention are formed by first coating a mold surface with a coagulant solution, for instance calcium nitrate, then dipping the mold into a polymer latex emulsion to cause gelation of the rubber over the mold surface.

When parameters of a high percentage of latex solids and/or a high concentration of the coagulant are used, the rubber particles gel very quickly forms a coagulated rubber latex layer over the entire latex-coated surface of the mold. A latex emulsion having a solids content of 35 wt.-% to 40 wt.-% or greater can be referred to as being a relatively *"high"* solids content latex emulsion. Sometimes the gelation can occur so quickly that the serum (water and aqueous-soluble materials) of the latex are forced out of the glove and appear as transparent drops. This is known as syneresis.

The polymer latex solids in the polymer latex preferably have an average particle size of 0.08 $\mu$m to 0.20 $\mu$m. According to a first particularly preferred embodiment of the invention, the polymer latex preferably has a relatively low solids content of between 14 wt.-% up to 20 wt.-% of polymer solids. Desirably, the polymer latex has a solids content of between 15 wt.-% to 18 wt.-%.

According to another particularly preferred embodiment of the invention, the polymer latex preferably has a solids content of between >20 wt.-% up to 60 wt.-% of polymer solids. Desirably, the polymer latex has a solids content of between 40 wt.-% to 50 wt.-%.

The pH value of the polymer latex, measured at 25°C, is preferably within the range of 7.5 to 9, esspecially within the range of 8.0 to 8.5.

During the dip process, the glove former is preferably dipped in the rubber latex for a dwell time of 25 seconds or less, more preferably for a dwell time of 13 seconds or less. Desirably, the dwell time of the single dip is between 12 seconds and 7 seconds. Even more desirably, the dwell time is between 7 to 10 seconds.

After dipping, the coagulated rubber latex is preferably heated to form a body of the elastomeric article on the mold. Said body is suitably leached with a suitable liquid composition to remove any remaining impurities. In that context, it is particularly advantagous that the coagulated rubber latex is leached with preferably hot water, then dipped in an aqueous solution preferably comprising at least one polyacrylate, and finally leached again with preferably hot water.

According to a particularly preferred embodiment of the invention, the coagulated substrate or film has a coating of a release agent over at least a portion of an outer surface (preferably the grip side in a glove) of the substrate. The release agent preferably is in the form of a *"waxy"* material and preferably is used in the fabrication of a powder-free dipped article. The release agent is typically a low-melting organic mixture or compound of high molecular weight, solid at room temperature and generally similar to fats and oils except that it contains no glycerides. For example, the release agent can be: a metallic stearate (e.g. calcium stearate, zinc stearate); a petroleum wax with a melting point of less than 200°C (e.g. melting point between 135°C to 180°C) which can be in the form of paraffin waxes, microcrystalline waxes, or petroleum jelly; a natural animal/insect wax such as bee's wax; or a synthetic wax (e.g. polyethylene waxes). Desirably, the release agent is a metallic stearate - particularly calcium stearate. Generally speaking, the release agent is preferably emulsified in the coagulant solution and is preferably present at levels of 1 wt.-% or less.

During processing of the rubber glove according to the present invention, only one side of the layer of coagulated latex forming the glove body on the glove former is preferably subjected to halogenations (i.e., chlorination), if chlorination is used at all. That is, the glove body will preferably have a chlorinated first surface forming a donning side of the glove body and an un-chlorinated second surface forming a grip side of the glove body. After forming, the glove is preferably cured and vulcanized and may be rinsed multiple times to remove any excess coagulant and accelerators that may be present on or in the material.

Of course, the process of the present invention may be adapted for the fabrication of other dipped-goods such as, for example, balloons, membranes and the like.

Potential fields of application of the elastomeric articles of the present include all areas in which conventional elastomeric articles are used. However, the elastomeric articles of the present invention are particularly suitable for thin-walled dipped goods such as medical examination or industrial gloves, balloons, condoms, probe covers, dental dams, finger cots, catheters, and the like. Alternatively, the elastomeric articles of the present invention can be incorporated as part of articles such as garments (e.g. shirts, pants, gowns, coveralls, headwear, shoe covers) or draping materials.

However, use of the elastomeric article of the invention as a glove, a balloon, or a condom, preferably as a glove, in particular as a medical exam glove is especially favored.

Using the protocol described in ASTM D3767, procedure A, glove membrane thicknesses are measured. The elastomeric substrate preferably have an average thickness of 0.025 or 0.03 mm to 0.15 mm, typically from 0.05 mm to 0.13 mm, or from 0.5 or 0.06 mm to 0.08 or 0.10 mm. When made into a glove, according to certain embodiments, the substrate has a thickness in the palm region of 0.05 mm to 0.09 mm. More desirably, the substrate has a thickness in the palm region of 0.05 mm to 0.07 mm.

The gloves made using the current invention are less bulky and more pliable to wear, providing greater comfort compared to conventional nitrile-butadiene rubber gloves, and further can lead to cost savings in the manufacture process and ultimately to the consumer. With a thinner material, the wearer also enjoys greater tactile sensation in the hand and finger tips than compared with regular gloves. As a disposable product, a rubber glove made according to the present invention will have a mass that is at least 40-50% less than a typical polyvinyl chloride-based glove of the same type (e.g., medical exam, household, or industrial) and size (i.e. small, medium, large, x-large). For example, a rubber medical exam glove according to the present invention that is made to the conventional size "M" or "Medium" will have a mass that is at least 40 % to 50 % less (or an even greater percentage less) than a typical polyvinyl chloride medical exam glove that is made to the conventional size "M" or "Medium".

As previously noted, the elastomeric article of the present invention exhibits very good mechanical properties, especially very good tear strength, very good modulus, and very good tensile strength. Given that conventional material used for elastomeric articles are much weaker material in terms of tensile strength and are likely to have pinholes in the membrane, medical exam gloves require the use of a greater amount of material to achieve the same level of strength and integrity as a rubber medical exam glove of the present invention. Thus, the rubber medical exam gloves of the present invention contribute relatively less waste and have less environmental impact because they have substantially less mass than comparable prior art medical exam gloves.

From a commercial viewpoint, the rubber medical exam gloves of the present invention are cost competitive with inexpensive polyvinyl chloride medical exam gloves. That is, the thinner rubber gloves of the present invention are more affordable than conventional rubber gloves that are thicker products. The relatively lower cost of the thinner rubber gloves of the present invention provides more opportunities for consumers to switch from conventional polyvinyl chloride gloves to a better performing rubber glove (e.g. fewer pinhole defects and better stretch/tensile properties) without much adverse economic impact in addition to avoiding exposure to hazardous components such as diethylhexylopthalate (DEHP) which can leach from polyvinyl chloride gloves.

Furthermore, the present invention allows for the production of high quality elastomeric articles using much cheaper rubber starting materials, because allergenic components and/or other hazardous components, such as fatty acids usually present in natural rubber, needn't to be removed from the rubber, since they are fixed to the calcium carbonate particles present in the final elastomeric article of the invention. Therefore, the potential of leaching said allergenic components and/or other hazardous components is comparatively low.

As noted above, manufacturers in the glove industry have not previously developed thinner, economical rubber gloves because it was generally believed that barrier properties of conventional rubber glove would be compromised by the thinness of the material and given the relative low cost of vinyl-based gloves, rubber gloves would be non-competitive in that segment of the market. Contrary to such beliefs, the present invention provides a thinner economical rubber glove (i.e. an average thickness between 0.01 mm to 0.10 mm, typically from 0.02 mm to 0.075 mm, in particular from 0.025 mm to 0.05 mm as determined in accordance with ASTM D3767, procedure A) with satisfactory barrier performance and force to stretch properties.

For example, the medical exam glove of the invention desirably has a failure rate of less than 1 % when it is subjected to pinhole leak testing generally in accordance with ASTM D5151-06. This means that when a sample of gloves of the invention (e.g. 100 gloves, 500 gloves, 1000 gloves, or 10,000 gloves or even more) are tested in accordance with ASTM D5151-6 which is a "pass-fail" test procedure, less than 1 % of the gloves in the sample will fail. As another example, the medical exam glove according to the invention desirably has a failure rate of less than 0.5 % or even less than 0.1 % when it is subjected to pinhole leak testing generally in accordance with ASTM D5151-06.

Although physical and chemical properties vary depending on the elastomer, the present invention combines soft, flexible elastomeric characteristics with satisfactory levels of strength. In an aspect of the invention, these desirable properties are also combined with satisfactory levels of breathability as described or characterized by conventional Water Vapor Transmission Rate (WVTR) testing.

Hereinbelow, the results of tests and comparative tests will be described without intending to limit the scope of the invention in any way.

### Glove preparation

1. Preparation of compounds for Glove preparation

Before the dipping was carried out, the following compounds were prepared:
a. Composite Dispersion

| Chemical | phr (based on dry weight of the latex) | Function | Example |
|---|---|---|---|
| Water | 1.8 | Solvent | |
| Sodium-Polyacrylate | 0.03 | Dispersing agent | Dispex N 40 |
| Bentonite | 0.02 | Thickener | |
| Sulphur | 0.5 | Crosslinking agent | Miwon |
| ZnO | 0.6 | Activator, Crosslinker | Metoxide |
| ZDEC | 0.4 | Accelerator | Anchor |
| $TiO_2$ | 1.4 | Pigment | TR92 |

1. Sodium-acrylate is added to the water and mixed for 1 min with a high speed dissolver, 800 r/min, teeth disc diameter 5 cm
2. Sulphur, ZnO, ZDEC and $TiO_2$ are added slowly while mixing is continued
3. After 2 min mixing, the mixing speed is increased to ~2000 r/min and mixing is continued for 5 min
4. Bentonite is added and mixing is continued for 5 min

b. PCC-Slurry

| Chemical | 9 | Function | Example |
|---|---|---|---|

(continued)

| | | | |
|---|---|---|---|
| Water | 58.8 | Solvent | |
| Sodium-Polyacrylate | 1.2 | Dispersing agent | Dispex N 40 |
| PCC | 40 | Filler | |

1. Sodium-acrylate is added to the water and mixed for 1 min in a high speed dissolver, 800 r/min, teeth disc diameter 5 cm
2. PCC is added slowly while mixing is continued
3. After 2 min mixing, the mixing speed is increased to ~2000 r/min and mixing is continued for 5 min

c. Dipping Compound

| Chemical | phr (based on dry weight of the latex | |
|---|---|---|
| NBR Latex, 45% | 100 | Polymer, Synthomer 6311 (Examples 1 to 5, and 11 to 19)<br>Polymer, Synthomer 6322 (Examples 6 to 10) |
| KOH, 2% in dissolved in water | ~ 0.50 | Stabilizer. pH control |
| PCC Slurry, 40% | 0 - 100 (see examples) | Filler |
| Composite dispersion | 5 | Additives |
| Ammonia (25%) | 1.4 | ph control |
| Soft water | | Solvent |

1. Latex is given into a stirred tank

2. pH of the latex is adjusted to 9.5 - 10 by slow addition of the solution of KOH

3. The dispersion of PCC in water is added slowly

4. The composite dispersion is added slowly

5. pH of the compound is adjusted to 9.5-10 by slow addition of Ammonia

6. The total solid content of the compound is adjusted to 25% by addition of soft water

7. The compound maturates at 28°C for 24 hours

d. Coagulant

| Chemical | % | Function | Example |
|---|---|---|---|
| Water | 78.5 | Solvent | |
| Sodium-Polyacrylate | 0.5 | Dispersing agent | Dispex N 40 |
| Calcium Nitrate | 20 | Coagulant | |
| PCC | 1 | Mold release agent | Precarb 100 |

1. Water and Sodium-polyacrylate are mixed

2. Calcium nitrate is added

3. PCC is added slowly

4. The mixture is stirred for 5 min

e. Pre-leach bath

| Chemical |
| --- |
| Hot water |

f. Post-leach bath

| Chemical |
| --- |
| Hot water |

g. Polymer Dip

| Chemical | % | Function | Example |
| --- | --- | --- | --- |
| Polyacrylate (19-21% solids) | 10 | Anti blocking agent | PERMUTEX EX-WT-78-152 |
| Water | 90 | Solvent | |

1. Water and Acrylate are mixed and stirred for 5 min

2. Dipping procedure

| 1 | A clean ceramic former is rinsed with water |
| --- | --- |
| 2 | The former is dried at 110°C to 120°C |
| 3 | The former is cooled to 70°C-75°C |
| 4 | The former is dipped into the coagulant dip<br>• 15 s; 50-60°C |
| 5 | The former is dried<br>• 8 s; 110°C-120°C |
| 6 | The former is dipped into the dipping compound<br>• 20 s; 25-28°C |
| 7 | The former is put into the gelling oven<br>• 3 s; 110°C-120°C |
| 8 | The former is put into the pre-leaching tank<br>• 5 s; 70°C-80°C |
| 9 | The former is put into the drying oven<br>• 5 s; 110°C-120°C |
| 10 | The former is put into the polymer dip<br>• 5 s |
| 11 | The glove is manually beaded on the former |

(continued)

| 12 | The former is put into the curing oven<br>• 15 min; 110°C - 120°C |
| 13 | The former is put into the post leaching tank 70°C<br>• 5 s; 70°C-80°C |
| 14 | The former is put into the drying oven<br>• 5 min; 110°C - 120°C |
| 15 | The glove is manually stripped from the former |
| 16 | The former is cleaned for next use |

Reference Examples 1-5

Gloves were prepared with different PCC loadings of 10 to 25 phr. For comparison, gloves without filler were also prepared.
The PCC was characterised as follows:

| Spec. surface area by BET method | 25 m$^2$/g |
| Sphere equivalent particle size | 88 nm |
| Morphology | Rhombohedral |
| Aspect ratio of particles by REM | 1.4 |

Force at break according to EN 455

| PCC Loading (phr) | Force at break according to EN 455 (N) |
| --- | --- |
| 0 | 10.7 |
| 10 | 12.8 |
| 15 | 12.6 |
| 20 | 11.1 |
| 25 | 10.4 |

Examples 6-10

Gloves were prepared with different PCC loadings of 10 to 20 phr. For comparison, gloves without filler were also prepared.
The PCC was characterised as follows:

| Spec. surface area by BET method | 40 m$^2$/g |
| Sphere equivalent particle size | 55 nm |
| Morphology | Rhombohedral |
| Aspect ratio of particles by REM | 1.3 |

Force at break according to EN 455

| PCC Loading (phr) | Force at break according to EN 455 (N) |
| --- | --- |
| 0 | 18.5 |
| 10 | 17.6 |

(continued)

| PCC Loading (phr) | Force at break according to EN 455 (N) |
|---|---|
| 15 | 15.3 |
| 20 | 15.6 |

Examples 11-19

Gloves were prepared with different PCC loadings of 10 to 40 phr. For comparison, gloves without filler were also prepared.
The used PCC was characterised as follows:

| | |
|---|---|
| Spec. surface area by BET method | 8 $m^2$/g |
| Sphere equivalent particle size | 276 nm |
| Morphology | Scalenohedral |

Mechanical properties

| PCC Loading (phr) | Force at break according to EN 455 (N) |
|---|---|
| 0 | 10.7 |
| 5 | 10.6 |
| 10 | 9.5 |
| 15 | 9.3 |
| 20 | 8.3 |
| 25 | 8.2 |
| 30 | 7.9 |
| 35 | 7.7 |
| 40 | 7.4 |

**Claims**

1. An elastomeric article comprising at least one elastomer and precipitated calcium carbonate particles, wherein:

the sphere equivalent particle size of said precipitated calcium carbonate particles is less than 1.0 $\mu$m, wherein the sphere equivalent particle size of the precipitated calcium carbonate particles is determined using the following equation:

$$\text{sphere equivalent particle size [}\mu\text{m]} = 2.21 \, / \, \text{BET} \; [m^2/g],$$

wherein the BET is determined as defined in the description;
the precipitated calcium carbonate has an average particle size (d50%) within a range of 0.8 $\mu$m to 1.2 $\mu$m; and said elastomer is made from latex particles of at least one naturally occurring rubber surrounded by protein anions, wherein said natural rubber latex is a dispersion of cis-1,4-polyisoprene in water.

2. The elastomeric article according to Claim 1, wherein the sphere equivalent particle size of said precipitated calcium carbonate particles is less than 500 nm.

3. The elastomeric article according to Claim 1 or 2, wherein the precipitated calcium carbonate particles have rhombohedral morphology.

4. The elastomeric article according to Claim 3, wherein the aspect ratio of the particles, defined as the ratio of maximum particle diameter and minimum particle diameter, is less than 2.0.

5. The elastomeric article according to Claim 3 or 4, wherein the specific surface of the particles is greater than 10 m$^2$/g.

6. The elastomeric article according to Claim 1 or 2, wherein the precipitated calcium carbonate particles have plate-like morphology.

7. The elastomeric article according to Claim 6, wherein the aspect ratio of the particles, defined as the ratio of maximum particle diameter and minimum particle diameter, is greater than 2:1.

8. The elastomeric article according to Claim 1 or 2, wherein the precipitated calcium carbonate particles have scalenohedral morphology.

9. The elastomeric article according to Claim 8, wherein the specific surface of the particles is preferably less than 20 m$^2$/g.

10. The elastomeric article according to at least one of the preceding claims, wherein said elastomer is made of an at least partly crosslinked rubber.

11. The elastomeric article according to at least one of the preceding claims, wherein said article comprises 1.0 phr to 40.0 phr of said precipitated calcium carbonate particles.

12. The elastomeric article according to at least one of the preceding claims, wherein said article comprises, in relation to the total weight of the elastomeric article, at least 50 %-wt. of said elastomer.

13. A process for making an elastomeric article, the process comprising the following steps:

(1) providing a mold;
(2) immersing the mold into a rubber latex emulsion comprising calcium carbonate particles, to form a layer of coagulated rubber latex comprising calcium carbonate particles, on the mold surface;
(3) drying the coagulated rubber latex to form a body of the elastomeric article on the mold; and
(4) removing the body of the elastomeric article from the mold, wherein
said elastomeric article comprises at least one elastomer and precipitated calcium carbonate particles,
the sphere equivalent particle size of said precipitated calcium carbonate particles is less than 1.0 $\mu$m, wherein the sphere equivalent particle size of the precipitated calcium carbonate particles is determined using the following equation:

$$\text{sphere equivalent particle size } [\mu m] = 2.21 \ / \ \text{BET } [m^2/g],$$

wherein the BET is determined as defined in the description;
the precipitated calcium carbonate has an average particle size (d50%) within a range of 0.8 $\mu$m to 1.2 $\mu$m; and
said elastomer is made from latex particles of at least one naturally occurring rubber surrounded by protein anions, wherein said natural rubber latex is a dispersion of cis-1,4-polyisoprene in water.

14. Use of an elastomeric article according to at least one of the Claims 1 to 12 as a medical examination or industrial glove, a balloon, a condom, a probe cover, a dental dam, a finger cot, a catheter, or as part of garments.

**Patentansprüche**

1. Elastomerartikel, umfassend mindestens ein Elastomer und ausgefällte Calciumcarbonatteilchen, wobei die kugeläquivalente Teilchengröße der ausgefällten Calciumcarbonatteilchen weniger als 1,0 $\mu$m beträgt, wobei die kugeläquivalente Teilchengröße der ausgefällten Calciumcarbonatteilchen unter Verwendung der folgenden Gleichung ermittelt wird:

$$\text{kugeläquivalente Teilchengröße } [\mu m] = 2{,}21 \,/\, \text{BET } [m^2/g],$$

wobei die BET wie in der Beschreibung definiert ermittelt wird;

das gefällte Calciumcarbonat eine mittlere Teilchengröße (d50%) innerhalb eines Bereichs von 0,8 $\mu$m bis 1,2 $\mu$m hat; und

das Elastomer aus Latexteilchen mindestens eines natürlich vorkommenden Kautschuks hergestellt ist, der von Proteinanionen umgeben ist, wobei der Naturkautschuklatex eine Dispersion von 1,4-Polyisopren in Wasser ist.

2. Elastomerartikel nach Anspruch 1, wobei die Kugeläquivalentteilchengröße der ausgefällten Calciumcarbonatteilchen weniger als 500 nm beträgt.

3. Elastomerartikel nach Anspruch 1 oder 2, wobei die ausgefällten Calciumcarbonatteilchen eine rhomboedrische Morphologie aufweisen.

4. Elastomerartikel nach Anspruch 3, wobei das Aspektverhältnis der Teilchen, definiert als das Verhältnis von maximalem Teilchendurchmesser und minimalem Teilchendurchmesser, weniger als 2,0 beträgt.

5. Elastomerartikel nach Anspruch 3 oder 4, wobei die spezifische Oberfläche der Teilchen größer als 10 $m^2$/g ist.

6. Elastomerartikel nach Anspruch 1 oder 2, wobei die ausgefällten Calciumcarbonatteilchen eine plättchenartige Morphologie aufweisen.

7. Elastomerartikel nach Anspruch 6, wobei das Aspektverhältnis der Teilchen, definiert als das Verhältnis von maximalem Teilchendurchmesser und minimalem Teilchendurchmesser, größer als 2:1 ist.

8. Elastomerartikel nach Anspruch 1 oder 2, wobei die ausgefällten Calciumcarbonatteilchen eine skalenoedrische Morphologie aufweisen.

9. Elastomerartikel nach Anspruch 8, wobei die spezifische Oberfläche der Teilchen vorzugsweise weniger als 20 $m^2$/g beträgt.

10. Elastomerartikel nach mindestens einem der vorhergehenden Ansprüche, wobei das Elastomer aus einem zumindest teilweise vernetzten Kautschuk hergestellt ist.

11. Elastomerartikel nach mindestens einem der vorhergehenden Ansprüche, wobei der Artikel 1,0 bis 40,0 Teile auf 100 Teile der ausgefällten Calciumcarbonatteilchen umfasst.

12. Elastomerartikel nach mindestens einem der vorhergehenden Ansprüche, wobei der Artikel in Bezug auf das Gesamtgewicht des Elastomerartikels mindestens 50 Gew.-% Elastomer umfasst.

13. Verfahren zur Herstellung eines Elastomerartikels, wobei das Verfahren die folgenden Schritte umfasst:

(1) Bereitstellen einer Form;
(2) Eintauchen der Form in eine Kautschuklatexemulsion, die Calciumcarbonatteilchen umfasst, um eine Schicht aus koaguliertem Kautschuklatex, umfassend Calciumcarbonatteilchen, auf der Formoberfläche zu bilden;
(3) Trocknen des koagulierten Kautschuklatex, um einen Körper des Elastomerartikels auf der Form zu bilden; und
(4) Entfernen des Körpers des Elastomerartikels aus der Form,
wobei der Elastomerartikel mindestens ein Elastomer und ausgefällte Calciumcarbonatteilchen umfasst,
wobei die kugeläquivalente Teilchengröße der ausgefällten Calciumcarbonatteilchen weniger als 1,0 $\mu$m beträgt,
wobei die kugeläquivalente Teilchengröße der ausgefällten Calciumcarbonatteilchen unter Verwendung der folgenden Gleichung ermittelt wird:

$$\text{kugeläquivalente Teilchengröße } [\mu m] = 2{,}21 \,/\, \text{BET } [m^2/g],$$

wobei die BET wie in der Beschreibung definiert ermittelt wird;

das gefällte Calciumcarbonat eine mittlere Teilchengröße (d50%) innerhalb eines Bereichs von 0,8 μm bis 1,2 μm hat; und

das Elastomer aus Latexteilchen mindestens eines natürlich vorkommenden Kautschuks hergestellt ist, der von Proteinanionen umgeben ist, wobei der Naturkautschuklatex eine Dispersion von 1,4-Polyisopren in Wasser ist.

14. Verwendung eines Elastomerartikels nach mindestens einem der Ansprüche 1 bis 12 als ärztlicher Untersuchungs- oder Industriehandschuh, Ballon, Kondom, Probenabdeckung, Lecktuch (dental dam), Fingerling, Katheter oder als Teil von Kleidungsstücken.

**Revendications**

1. Article élastomérique comprenant au moins un élastomère et des particules de carbonate de calcium précipité, dans lequel:

la taille de particule équivalente à une sphère desdites particules de carbonate de calcium précipité est inférieure à 1,0 μm, dans lequel la taille de particule équivalente à une sphère des particules de carbonate de calcium précipité est déterminée en utilisant l'équation suivante:

$$\text{taille de particule équivalente à une sphère } [\mu m] = 2{,}21/\text{BET } [m^2/g],$$

où la BET est déterminée comme défini dans la description;
le carbonate de calcium précipité a une taille de particule moyenne (d50%) dans une plage de 0,8 μm à 1,2 μm; et
ledit élastomère est fabriqué à partir de particules de latex d'au moins un caoutchouc naturel entourées par des anions de protéines, dans lequel ledit latex de caoutchouc naturel est une dispersion de cis-1,4-polyisoprène dans l'eau.

2. Article élastomérique selon la revendication 1, dans lequel la taille de particule équivalente à une sphère desdites particules de carbonate de calcium précipité est inférieure à 500 nm.

3. Article élastomérique selon la revendication 1 ou 2, dans lequel les particules de carbonate de calcium précipité ont une morphologie rhomboédrique.

4. Article élastomérique selon la revendication 3, dans lequel le rapport d'aspect des particules, défini comme le rapport du diamètre maximal des particules et du diamètre minimal des particules, est inférieur à 2,0.

5. Article élastomérique selon la revendication 3 ou 4, dans lequel la surface spécifique des particules est supérieure à 10 m$^2$/g.

6. Article élastomérique selon la revendication 1 ou 2, dans lequel les particules de carbonate de calcium précipité ont une morphologie en forme de plaque.

7. Article élastomérique selon la revendication 6, dans lequel le rapport d'aspect des particules, défini comme le rapport du diamètre maximal des particules et du diamètre minimal des particules, est supérieur à 2:1.

8. Article élastomérique selon la revendication 1 ou 2, dans lequel les particules de carbonate de calcium précipité ont une morphologie scalénoédrique.

9. Article élastomérique selon la revendication 8, dans lequel la surface spécifique des particules est de préférence inférieure à 20 m$^2$/g.

10. Article élastomérique selon au moins l'une des revendications précédentes, dans lequel ledit élastomère est fait d'un caoutchouc au moins partiellement réticulé.

11. Article élastomérique selon au moins l'une des revendications précédentes, dans lequel ledit article comprend 1,0 pcp à 40,0 pcp desdites particules de carbonate de calcium précipité.

**12.** Article élastomérique selon au moins l'une des revendications précédentes, dans lequel ledit article comprend, par rapport au poids total de l'article élastomérique, au moins 50% en poids dudit élastomère.

**13.** Procédé de fabrication d'un article élastomérique, le procédé comprenant les étapes suivantes:

(1) fournir un moule;
(2) immerger le moule dans une émulsion de latex de caoutchouc comprenant des particules de carbonate de calcium, pour former une couche de latex de caoutchouc coagulé comprenant des particules de carbonate de calcium, sur la surface du moule;
(3) sécher le latex de caoutchouc coagulé pour former un corps de l'article élastomérique sur le moule; et
(4) retirer le corps de l'article élastomérique du moule, dans lequel ledit article élastomérique comprend au moins un élastomère et des particules de carbonate de calcium précipité,
la taille de particule équivalente à une sphère desdites particules de carbonate de calcium précipité est inférieure à 1,0 μm, dans lequel la taille de particule équivalente à une sphère des particules de carbonate de calcium précipité est déterminée en utilisant l'équation suivante:

$$\text{taille de particule équivalente à une sphère } [\mu m] = 2{,}21/\text{BET} \mid [m^2/g],$$

où la BET est déterminée comme défini dans la description;
le carbonate de calcium précipité a une taille de particule moyenne (d50%) dans une plage de 0,8 μm à 1,2 μm; et ledit élastomère est fabriqué à partir de particules de latex d'au moins un caoutchouc naturel entourées par des anions de protéines, dans lequel ledit latex de caoutchouc naturel est une dispersion de cis-1,4-polyisoprène dans l'eau.

**14.** Utilisation d'un article élastomérique selon au moins l'une des revendications 1 à 12 comme gant d'examen médical ou gant industriel, ballon, préservatif, capuchon de sonde, digue dentaire, doigtier, cathéter ou comme pièce de vêtements.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 20090192244 A1
- US 6979734 B1
- US 5783038 A
- US 6673871 B
- US 7041367 B
- US 7178171 B

### Non-patent literature cited in the description

- **D. HILL.** How to get more for less?. *A literature review on the use of fillers in articles dipped from latex,* 20 March 2010
- **S. MANROSHAN ; A. BAHARIN.** Effect of Nano-sized Calcium Carbonate on the Mechanical Properties of Latex Films. *Journal of Applied Polymer Science,* 2005, vol. 96, 1550-1556
- **J. KHAMSOOK ; R. MAGARAPHAN.** *Effect of fillers on the surface properties of NR and DPNR sheets Latex 2006,* 24 January 2006
- **S. MATHEW ; S. VARGHESE.** Natural Rubber Latex-based Nanocomposites with Layered Silicates. *J. Rubb. Res.,* vol. 8 (1), 1-15
- **W.G. HWANG ; K.H. WIE ; C.M. WU.** Preparation and mechanical properties of nitrile butadiene rubber/silicate nanocomposites. *Polymer,* 2004, vol. 45, 5729-5734
- **J.K. KURIAN ; K.C. MARY ; N. R. PEETHAMBARAN ; B. KURIAKOSE.** Effect of Non-Black Fillers and Pigments on the physical properties and degradation resistance of natural rubber latex thread exposed to UV-radiation. *Indian Journal of Natural Rubber Research,* 2001, vol. 14 (2), 102-105
- **H.H. CAI ; S.D. LI ; G.R. TIAN ; H.BI. WANG ; J.H. WANG.** Reinforcement of Natural Rubber Latex Film by Ultrafine Calcium Carbonate. *Journal of Applied Polymer Science,* 2003, vol. 87, 982-985
- **S. SCHLOGL ; N. AUST ; R. SCHALLER ; A. HOLZNER ; W. KERN.** Survey of chemical residues and biological evaluation of photochemically pre-vulcanized surgical gloves. *Monatsh Chem,* 2010, vol. 141, 1365-1372
- Ullmann's Encyclopedia of Industrial Chemistry. Wiley-VCH, 1997
- Type of latices. **D. C. BLACKLEY.** Polymer Latices: Science and technology. Springer, 1997, vol. 2
- Type of latices. D. C. Blackley Polymer Latices: Science and technology. Springer, 1997, vol. 2